# EUROPEAN PATENT SPECIFICATION

(11) **EP 4 340 446 B1**
(45) Date of publication and mention of the grant of the patent: **22.07.2026**
(21) Application number: 21941187.3
(22) Date of filing: 10.05.2021
(51) Int. Cl.: H04W 36/00, H04W 28/02, H04B 7/185

(54) **QUALITY OF SERVICE INDICATION AND DETERMINATION METHOD AND APPARATUS, COMMUNICATION DEVICE, AND STORAGE MEDIUM**
VERFAHREN UND VORRICHTUNG ZUR ANZEIGE UND BESTIMMUNG DER DIENSTGÜTE, KOMMUNIKATIONSVORRICHTUNG UND SPEICHERMEDIUM
PROCÉDÉ ET APPAREIL D'INDICATION ET DE DÉTERMINATION DE QUALITÉ DE SERVICE, DISPOSITIF DE COMMUNICATION, ET SUPPORT DE STOCKAGE

(43) Date of publication of application: 20.03.2024
(73) Proprietor: Beijing Xiaomi Mobile Software Co., Ltd., Beijing 100085 (CN)
(72) Inventor: HONG, Wei, Beijing 100085 (CN)
(74) Representative: Dehns Germany Partnerschaft mbB
(86) International application number: PCT/CN2021/092855
(87) International publication number: WO 2022/236611

(56) References cited:
- CN-A- 110 505 653
- CN-A- 112 771 928
- US-A1- 2016 269 964
- US-A1- 2020 396 000
- ERICSSON: "QoS aspects of satellite backhaul and satellite access", vol. SA WG2, no. Elbonia; 20210224 - 20210309, 18 February 2021 (2021-02-18), XP052172549, Retrieved from the Internet <URL:https://ftp.3gpp.org/tsg_sa/WG2_Arch/TSGS2_143e_Electronic/Docs/S2-2100201.zip S2-2100201_5GSAT_DP_QoS.doc> [retrieved on 20210218]
- CATT: "Corrections and clarification on satellite backhaul", vol. SA WG2, no. Electronic, Elbonia; 20210412 - 20210416, 20 April 2021 (2021-04-20), XP051997251, Retrieved from the Internet <URL:https://ftp.3gpp.org/tsg_sa/WG2_Arch/TSGS2_144E_Electronic/Docs/S2-2103554.zip S2-2103554_was 2449r01_23503_Corrections and clarification on satellite backhaul.docx> [retrieved on 20210420]
- "3rd Generation Partnership Project; Technical Specification Group Services and System Aspects; Policy and charging control framework for the 5G System (5GS); Stage 2 (Release 17)", 29 March 2021 (2021-03-29), XP051997204, Retrieved from the Internet <URL:https://ftp.3gpp.org/tsg_sa/WG2_Arch/Latest_SA2_Specs/DRAFT_INTERIM/Archive/23503-h00_from_g80_CRs_Implemented.zip 23503-h00_from_g80_CRs_Implemented.docx> [retrieved on 20210329]
- UNKNOWN: "5G; Policy and Charging Control Framework for the 5G System; Stage 2 (3GPP TS 23.503 version 15.2.0 Release 15)", 1 July 2018 (2018-07-01), pages 2018 - 7, XP055646991, Retrieved from the Internet <URL:http://www.etsi.org/deliver/etsi_ts/123500_123599/123503/15.02.00_60/ts_123503v150200p.pdf> [retrieved on 20191127]
- XIAOMI: "5QI for satellite backhaul", 3GPP DRAFT; S2-2102850, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e (e-meeting); 20210412 - 20210416, 6 April 2021 (2021-04-06), Mobile Competence Centre ; 650, route des Lucioles ; F-06921 Sophia-Antipolis Cedex ; France , XP051994208
- XIAOMI: "Policy control based on satellite backhaul information", 3GPP DRAFT; S2-2009487, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. E (e-meeting) Elbonia ;20201116 - 20201120, 23 November 2020 (2020-11-23), Mobile Competence Centre ; 650, route des Lucioles ; F-06921 Sophia-Antipolis Cedex ; France , XP051958304
- XIAOMI: "Introduce new standardized 5QI to QoS characteristics mapping due to Satellite Access/Satellite Backhaul", 3GPP DRAFT; S2-2008596, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20201116 - 20201120, 9 November 2020 (2020-11-09), Mobile Competence Centre ; 650, route des Lucioles ; F-06921 Sophia-Antipolis Cedex ; France , XP051952634
- TNO: "New 5QI for satellite backhaul and satellite access", 3GPP DRAFT; S2-2102936, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20210412 - 20210416, 6 April 2021 (2021-04-06), Mobile Competence Centre ; 650, route des Lucioles ; F-06921 Sophia-Antipolis Cedex ; France , XP051994293

## Description

### TECHNICAL FIELD

The disclosure relates to the field of wireless communication technologies but is not limited to the field of wireless communication technologies, and more particularly, to a method and an apparatus for determining a quality of service (QoS) identity (QI), a communication device, and a storage medium.

### BACKGROUND

A data connection between a base station and a core network may be realized over a non-terrestrial network such as a satellite backhaul link. The satellite backhaul link may also be called a satellite backhaul. When compared with a terrestrial network, the satellite backhaul link has a larger delay in a data transmitting or receiving process. For example, a one-way delay of a satellite backhaul link established by a geosynchronous equatorial orbit (GEO) satellite may reach 270ms; a one-way delay of a satellite backhaul link established by a low earth orbit (LEO) satellite at an altitude of 1200 kilometers may reach 21ms; and a one-way delay of a satellite backhaul link established by a LEO satellite at an altitude of 600 kilometers may reach 13ms.
ERICSSON: "QoS aspects of satellite backhaul and satellite access", 3GPP DRAFT; S2-2100201, XP052172549 discloses for satellite backhaul, N7 is enhanced to inform the AF about the backhaul satellite category, text is added in TS 23.501 that standardized 5QIs may have longer PDB and CN PDB (but with unmodified AN PDB) in case of satellite backhaul. CATT: "Corrections and clarification on satellite backhaul",3GPP DRAFT; S2-2103554, XP051997251 discloses If an AF requests the PCF to report on the change of satellite backhaul category (i.e. GEO, MEO, LEO) and change between satellite backhaul and non-satellite backhaul, the PCF shall provide the corresponding Policy Control Request Trigger to the SMF to enable the report of the change in satellite backhaul category to the PCF. The PCF shall, upon reception of information about the satellite backhaul category the user is currently using and upon indication of change of satellite backhaul category, notify the AF on changes of the satellite backhaul category and forward the information received from the SMF to the AF.

### SUMMARY

In view of this, embodiments of the disclosure provide a method and an apparatus for determining a quality of service identity, a communication device, and a storage medium. The invention is set out in the appended set of claims.

Embodiments of the disclosure provide the method and the apparatus for determining a quality of service identity, the communication device, and the storage medium. The PCF determines that the data flow can be transmitted or received over the satellite backhaul link; and selects, for the data flow that can be transmitted or received over the satellite backhaul link, the quality of service identity corresponding to the same data flow service transmitted or received over the non-satellite backhaul link. In this way, when the data flow can be transmitted or received over the satellite backhaul link, the PCF uses the quality of service identity of the non-satellite backhaul link to determine the quality of service identity of the data flow. On the one hand, it is no longer necessary for the base station to distinguish whether the data flow is transmitted or received over the satellite backhaul link and/or for the base station to update the quality of service identity such as the 5th generation mobile communication (5G) quality of service identity (5QI) according to whether the satellite backhaul link is used, reducing the load on the base station. On the other hand, when the base station processes the QoS data flow, it may ignore whether the data flow is transmitted or received over the satellite backhaul link, reducing the load on the base station. On still other hand, there is no need to change service of quality identity models such as 5QI, so as to improve the compatibility of the service of quality identity.

It should be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram of a wireless communication system according to some embodiments.
FIG. 2 is a schematic flowchart of a method for determining a quality of service identity according to some embodiments.
FIG. 3 is a schematic flowchart of a process of transmitting by an AF an AF service request according to some embodiments.
FIG. 4 is a schematic flowchart of a method for transmitting or receiving information according to some embodiments.
FIG. 5 is a schematic flowchart of another method for determining a quality of service identity according to some embodiments.
FIG. 6 is a block diagram of an apparatus for transmitting or receiving information according to some embodiments.
FIG. 7 is a block diagram of a device for determining a quality of service identity or transmitting or receiving information according to some embodiments.
FIG. 8 is a schematic flowchart of an interaction process of an AF request according to some embodiments.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the embodiments of the disclosure. Instead, they are merely examples of apparatuses and methods consistent with aspects related to the disclosure as recited in the appended claims.

The terms used in embodiments of the disclosure are only for the purpose of describing specific embodiments and are not intended to limit the embodiments of the disclosure. The singular forms of "a", "said" and "the" used in the embodiments of the disclosure and appended claims are also intended to include the plural forms, unless the context clearly indicates other meanings. It should also be understood that the term "and/or" as used herein refers to and includes any or all possible combinations of one or more associated listed items.

It should be understood that although the terms first, second, and third may be used in embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the word "if" as used herein may be interpreted as "when", "while" or "in response to determining".

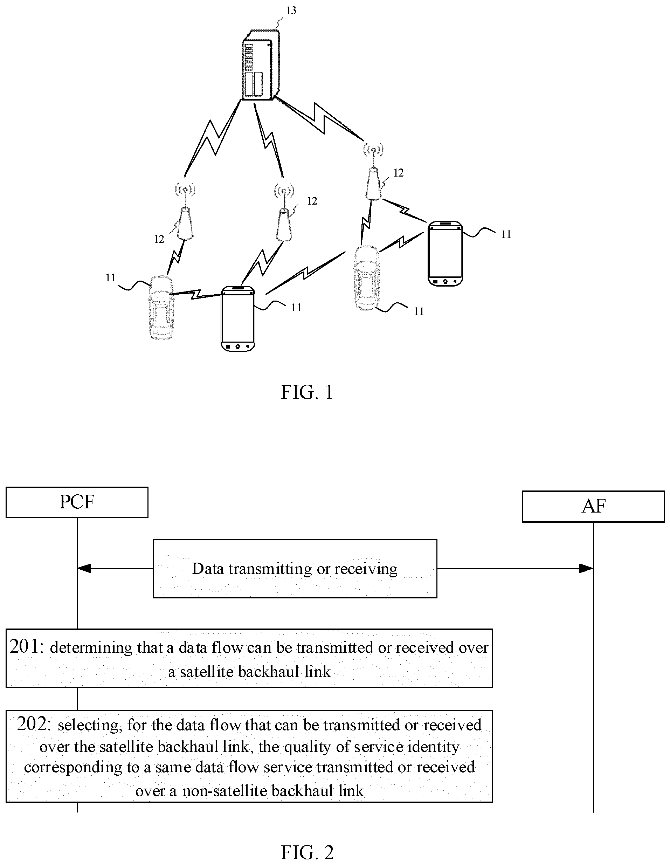

With reference to FIG. 1, FIG. 1 is a schematic diagram of a wireless communication system according to some embodiments. As illustrated in FIG. 1, the wireless communication system is a communication system based on cellular mobile communication technologies. The wireless communication system may include terminals 11 and base stations 12.

The terminal 11 may be a device that provides voice and/or data connectivity to a user. The terminal 11 may communicate with one or more core networks via a radio access network (RAN). The terminal 11 may be an Internet-of-Things (IoT) terminal such as a sensor device, a mobile phone (or a cellular phone), and a computer with the IoT terminal such as a fixed, portable, pocket-sized, handheld, built-in computer or vehicle-mounted device, for example, station (STA), subscriber unit, subscriber station, mobile station, mobile, remote station, access point, remote terminal, access terminal, user terminal, user agent, user device, or user equipment (UE). Alternatively, the terminal 11 may also be a device of an unmanned aircraft. Alternatively, the terminal 11 may also be a vehicle-mounted device, for example, a trip computer having a wireless communication function or a wireless communication device externally connected to the trip computer. Alternatively, the terminal 11 may also be a roadside device, for example, a street lamp, a signal lamp or other roadside device having the wireless communication function.

The base station 12 may be a network side device in the wireless communication system. The wireless communication system may be the 4th generation mobile communication (4G) system, also known as the long term evolution (LTE) system. The wireless communication system may also be the 5th generation mobile communication (5G) system, also known as the new radio (NR) system or 5G NR system. Alternatively, the wireless communication system may also be the following generation system of the 5G system. The access network in the 5G system may be called the new generation-radio access network (NG-RAN). The wireless communication system may also be the machine type of communication (MTC) system.

The base station 12 may be an evolved base station (eNB) adopted in the 4G system. Alternatively, the base station 12 may also be a base station (gNB) adopting a centralized and distributed architecture in the 5G system. When the base station 12 adopts the centralized and distributed architecture, it usually includes a central unit (CU) and at least two distributed units (DUs). The CU is provided with a protocol stack having a packet data convergence protocol (PDCP) layer, a radio link control (RLC) layer, and a media access control (MAC) layer. The DU is provided with a protocol stack having a physical (PHY) layer. The embodiments of the disclosure may not limit the specific implementation manner of the base station 12.

A wireless link may be established between the base station 12 and the terminal 11 by a wireless air interface. In different embodiments, the wireless air interface is a wireless air interface based on the 4G standard. Alternatively, the wireless air interface is a wireless air interface based on the 5G standard, for example, the wireless air interface is an NR. The wireless air interface may also be a wireless air interface based on a next generation mobile communication network technology standard based on the 5G standard.

In some embodiments, an end to end (E2E) link may also be established between the terminals 11, for example, a vehicle to vehicle (V2V) communication, a vehicle to infrastructure (V2I) communication, and a vehicle to pedestrian (V2P) communication in a vehicle to everything (V2X) communication.

In some embodiments, the above wireless communication system may also include a network management device 13.

The base stations 12 are connected to the network management device 13 respectively. The network management device 13 may be a core network device in the wireless communication system. For example, the network management device 13 may be a mobility management entity (MME) of an evolved packet core (EPC). Alternatively, the network management device may also be other core network devices, such as a serving gateway (SGW), a public data network gateway (PGW), a policy and charging rules function (PCRF) unit, or a home subscriber server (HSS). The implementation form of the network management device 13 is not limited in the embodiments of the disclosure.

The execution subjects involved in the embodiments of the disclosure may include, but be not limited to, a UE such as a mobile terminal that uses a cellular mobile communication network technology for wireless communication, and an access network device such as a base station.

An application scenario in some embodiments of the disclosure is that a 5G quality of service (QoS) identity (5QI) is a scalar used to point to a 5G QoS characteristic parameter such as a default priority level, a packet delay budget (PDB), or a packet error rate. These characteristic parameters are used to control QoS of forwarding or processing data flows.

The PDB defines an upper limit of a delay between a UE and a user plane function (UPF) terminating an N6 interface. The 5QI is set for non-satellite backhaul links. When satellite backhaul links are used, additional delays of satellite backhaul links should be taken into account for the PDB.

For example, when a value of the 5QI is selected to be 9, the PDB is 300ms for a terrestrial communication network. A one-way delay of a satellite backhaul link established by a geosynchronous equatorial orbit (GEO) satellite is 270ms and the PDB is 270+300=570ms, which exceeds the PDB obtained when 5QI=9.

There are 4 manners to enable the 5QI to support the satellite backhaul link.

Manner 1: a 5QI with PDB=570ms is newly defined.

The disadvantage of adopting this manner is that the gNB needs to support the newly defined 5QI.

Manner 2: 5QI=10 is multiplexed. The gNB needs to distinguish to use between CN PDB=20ms or CN PDB=271+20=291ms. It may be determined by the gNB whether there is a satellite backhaul link that needs to use CN PDB=291ms. For example, the gNB may determine whether there is the satellite backhaul link by a local configuration or an identified non-satellite backhaul link.

The disadvantage of adopting this manner is that the gNB needs to determine whether the satellite backhaul link using CN PDB = 291ms exists.

Manner 3: the CN PDB is configured on the SMF. When the satellite backhaul link is used, the SMF indicates the CN PDB for the gNB.

The disadvantage of adopting this manner is that the when the satellite backhaul link is detected, the CN PDB needs to be dynamically indicated, which will affect both the SMF and the gNB.

Manner 4: two PDBs with 5QI=9 are defined. They are used for satellite backhaul links and non-satellite backhaul links respectively.

The disadvantage of adopting this manner is that the new 5QI does not conform to the existing 5QI model.

Therefore, how to apply the 5QI to the satellite backhaul link and reduce the impact on the existing 5QI model and gNB is an urgent problem to be solved.

As illustrated in FIG. 2, some embodiments provide a method for determining a quality of service identity. The method for determining a quality of service identity may be applicable to a policy control function (PCF) in a core network. The method includes the following.

Step 201: it is determined that a data flow can be transmitted or received over a satellite backhaul link.

Step 202: the quality of service identity corresponding to a same data flow service transmitted or received over a non-satellite backhaul link is selected for the data flow that can be transmitted or received over the satellite backhaul link.

In the core network, the PCF may provide relevant policies for all responsible mobility, UE access selection, and PDU session.

Determining that the data flow can be transmitted or received over the satellite backhaul link includes: the data flow can be transmitted or received over the satellite backhaul link, a delay caused when transmitted or received over the satellite backhaul link can be accepted by the core network, and the like. The core network includes a 5G core network (5GC).

The PCF may determine that the data flow can be transmitted or received over the satellite backhaul link. Or another network element of the core network, such as an application function (AF), may indicate to the PCF that the data flow can be transmitted or received over the satellite backhaul link.

The satellite backhaul link is a link between the core network and the access network. Therefore, the delay caused when transmitted or received over the satellite backhaul link may be added to the CN PDB. The CN PDB represents a delay between any UPF terminating the N6 interface and the 5G-AN in the given PDB. In the 5G communication, the CN PDB does not affect the behavior of the base station. The base station may include gNB or the like. The gNB may not distinguish between data flows transmitted or received over satellite backhaul links and data flows transmitted or received over non-satellite backhaul links. Therefore, there is no need to inform the gNB whether the data flow is transmitted or received over the satellite backhaul link.

After it is determined that the data flow can be transmitted or received over the satellite backhaul link, the PCF may determine the service of quality identity of the data flow transmitted or received over the satellite backhaul link.

In some embodiments, for the 5G cellular mobile communication, the quality of service identity may include a 5G quality of service identity (5QI).

The PCF may determine the quality of service identity of the data flow transmitted or received over the satellite backhaul link by a manner of determining the quality of service identity of the data flow transmitted or received over the non-satellite transmission. For example, the standardized 5QI defined in 3GPP TS 23.501 may be used to determine the 5QI of the data flow transmitted or received over the satellite backhaul link. That is, the PCF may determine the quality of service identity of the data flow transmitted or received over the satellite backhaul link by the policy of determining the quality of service identity for the non-satellite transmission.

For example, if the data flow service of the data flow transmitted or received over the satellite backhaul link is consistent with the data flow service of the data flow transmitted or received over the non-satellite backhaul link, the service of quality identities of the two data flows may be the same and the service of quality identity corresponding to the data flow transmitted or received over the non-satellite backhaul link may be used.

The delay caused when transmitted or receiver over the satellite backhaul link may be added to the CN PDB and may not affect the behavior of the gNB on the data flow. When the core network such as the 5GC may accept the delay caused when transmitted or receiver over the satellite backhaul link, the PCF may use the manner of determining the quality of service identity of the data flow of the non-satellite transmission link to determine the quality of service identity of the data flow transmitted or receiver over the satellite backhaul link.

In this way, when the data flow can be transmitted or received over the satellite backhaul link, the PCF uses the quality of service identity of the non-satellite backhaul link to determine the quality of service identity of the data flow. On the one hand, it is no longer necessary for the base station to distinguish whether the data flow is transmitted or received over the satellite backhaul link and/or for the base station to update the quality of service identity such as the 5QI according to whether the satellite backhaul link is used, reducing the load on the base station. On the other hand, when the base station processes the QoS data flow, it may ignore whether the data flow is transmitted or received over the satellite backhaul link, reducing the load on the base station. On still other hand, there is no need to change service of quality identity models such as 5QI, so as to improve the compatibility of the service of quality identity.

In some embodiments, determining that the data flow can be transmitted or received over the satellite backhaul link includes: receiving an AF service request and determining that the data flow can be transmitted or received over the satellite backhaul link according to the AF service request; or determining that the data flow can be transmitted or received over the satellite backhaul link according to a preconfigured transmission willingness indication.

The AF is used for interworking with the core network to provide services for users. The AF indicates that the data flow can be transmitted or received over the satellite backhaul link by the AF service request.

The PCF determines that the data flow can be transmitted or received over the satellite backhaul link according to the AF service request.

The AF service request carries indication information, directly indicating that the data flow can be transmitted or received over the satellite backhaul link. The AF service request also carries a parameter when the data flow is transmitted or received over the satellite backhaul link, such as the delay value when transmitted or received over the satellite backhaul link, and the PCF determines whether the data flow can be transmitted or received over the satellite backhaul link.

After determining that the data flow can be transmitted or received over the satellite backhaul link, the PCF determines the service of quality identity of the data flow.

For example, the PCF may adopt the policy of determining the quality of service identity of the non-satellite link to determine the quality of service identity of the data flow transmitted or received over the satellite backhaul link.

The transmission willingness indication may indicate that the data flow is transmitted or received over the satellite backhaul link. The transmission willingness indication may be pre-configured in the PCF.

For example, the transmission willingness indication may be pre-configured in a service level agreement (SLA) of the PCF. An SLA is an agreement between an operator and a service provider. The processing manner for the data flow transmitted or received over the satellite backhaul link may be determined by the operator and the service provider. For example, if the delay of the satellite backhaul link is acceptable, the transmission willingness indication may be set in the SLA. According to the transmission willingness indication in the SLA, the PCF determines the quality of service identity of the data flow transmitted or received over the satellite backhaul link according to the policy of determining the service of quality identity of the non-satellite transmission link. For example, the 5QI mode of the related art is used to determine the 5QI of the data flow transmitted or received over the satellite backhaul link.

In some embodiments, determining that the data flow can be transmitted or received over the satellite backhaul link according to the AF service request includes: determining that the data flow can be transmitted or received over the satellite backhaul link according to a transmission willingness indication carried in the AF service request for indicating a willingness to transmit or receive over the satellite backhaul link; or determining that the data flow can be transmitted or received over the satellite backhaul link according to a delay value carried in the AF service request being less than or equal to a predetermined transmission delay for transmitting or receiving a data flow over the satellite backhaul link.

The transmission willingness indication may indicate that the data flow is transmitted or received over the satellite backhaul link. The AF sets the transmission willingness indication in the AF service request, to indicate to the PCF that the data flow is transmitted or received over the satellite backhaul link. In this case, the PCF no longer determines whether the data flow can be transmitted or received over the satellite backhaul link, but directly determines the service of quality identity of the data flow transmitted or received over the satellite backhaul link according to the policy of determining the service of quality identity of the data flow transmitted or received over the non-satellite link.

The AF also carries the delay value when the data flow is transmitted or received over the satellite backhaul link in the AF service request. The PCF determines whether the data flow is transmitted or received over the satellite backhaul link. The PCF may compare the delay value with the predetermined transmission delay for transmitting or receiving a data flow over the satellite backhaul link. If the delay value is less than or equal to the predetermined transmission delay for transmitting or receiving a data flow over the satellite backhaul link, it determines whether the data flow is transmitted or received over the satellite backhaul link and determines the service of quality identity of the data flow transmitted or received over the satellite backhaul link according to the policy of determining the service of quality identity of the data flow transmitted or received over the non-satellite link. The predetermined transmission delay for transmitting or receiving a data flow over the satellite backhaul link is 1100ms or the like.

In some embodiments, if the delay value when the data flow is transmitted or received over the satellite backhaul link, carried in the AF service request, is greater than the predetermined transmission delay for transmitting or receiving a data flow over the satellite backhaul link, the PCF may not determine the 5QI of the data flow.

In some embodiments, the AF transmits the AF service request carrying the transmission willingness indication in response to determining that the delay value when the data flow is transmitted or received over the satellite backhaul link is less than or equal to a first delay threshold.

The AF may determine whether the data flow can be transmitted or received over the satellite backhaul link. Before the AF service request is transmitted to the PCF, the AF may compare the delay value with the first delay threshold. The first delay threshold may be a delay value when transmitted or received over the satellite backhaul link that the AF can bear.

If the delay value is less than or equal to the first delay threshold, the AF may consider the delay value acceptable and may directly carry the transmission willingness indication in the PCF and indicate the PCF to determine the service of quality identity.

In some embodiments, the AF determines the delay value enabling the data flow to be transmitted or received over the satellite backhaul link according to service requirements of the data flow.

The AF may determine the delay value enabling the data flow to be transmitted or received over the satellite backhaul link according to service requirements of the data flow. And the delay value is transmitted to the PCF and the PCF further determines whether the data flow can be transmitted or received over the satellite backhaul link.

In some embodiments, before the AF service request is transmitted to the PCF, the AF may compare the delay value required by the service of the data flow with a second delay threshold. The second delay threshold may be a maximum delay value when transmitted or received over the satellite backhaul link that the AF can bear.

If the delay value is less than or equal to the second delay threshold, the AF may consider the delay value acceptable and may directly indicate the transmission willingness indication.

In some embodiments, the AF determines that the data flow cannot be transmitted or received over the satellite backhaul link in response to the service requirements of the data flow; and transmits indication information for indicating a removal of the data flow, to the core network.

The data flow cannot be transmitted or received over the satellite backhaul link may include: the delay value when the data flow is transmitted or received over the satellite backhaul link is greater than the maximum delay value that the AF can bear.

For example, if the delay value is greater than the second delay threshold, the AF may consider the delay value unacceptable and the AF may indicate the core network to remove the data flow from the QoS flow.

In some embodiments, receiving the AF service request includes: obtaining the AF service request from a unified data storage (UDR).

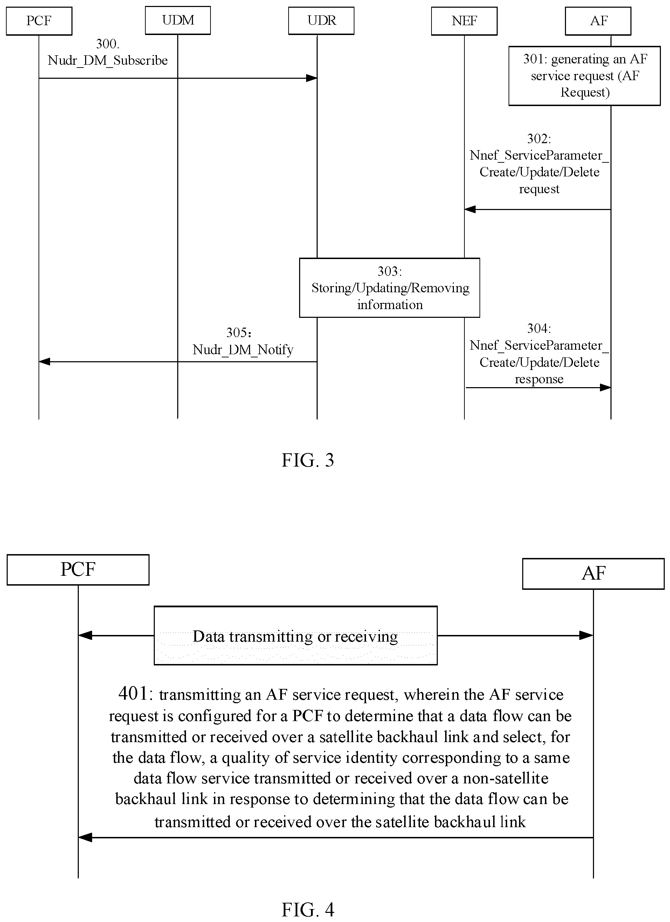

The AF transmits the AF service request to the UDR over the NEF and the specific steps for the NCF to obtain the AF service request are illustrated in FIG. 3, which includes the following steps.

Step 300: a PCF subscribes to a UDER of a service specific parameter.

Step 301: an AF generates an AF service request, including:
A. Service description
   The service description is information to identify a service the service parameter is applied to. The service description in the AF service request may be represented by a combination of a data network name (DNN), a single network slice selection assistance information (S-NSSAI), an AF-Service-Identifier, and/or an application identifier.
B. A service parameter: the transmission willingness indication to transmit or receive the data flow over the satellite backhaul link.
C. Target UE(s) or a UE group

Target UE(s) or a group of UEs indicate UE(s) who the service parameter shall be delivered to. Individual UEs may be identified by a generic public subscription identity, or an IP address/prefix, or a media access control (MAC) address. The group of UEs may be identified by an external group identity. If identifier(s) of target UE(s) or a group of UEs are not provided, the service parameter identified by the service description shall be delivered to any UE.

Step 302: the AF transmits the AF service request to a NEF.

Step 303: the NEF authorizes the service request and transmits the AF service request to a UDR. The UDR stores the service parameter, i.e., an indication of a willingness of transmitting or receiving the data flow over the satellite backhaul link of the service for the target UE(s) or the group of UEs.

Step 304: the NEF responds to the AF.

Step 305: the UDR notifies the PCF of the update of the service parameter, that is, an indication of a willingness of transmitting or receiving the data flow over the satellite backhaul link.

When the PCF is notified of the satellite backhaul link for the application data flow, and if the transmission willingness indication for transmitting or receiving the data flow over the satellite backhaul link is set, the PCF adopts the 5QI policy of the non-satellite backhaul link to determine the 5QI of the data flow transmitted or received over the satellite backhaul link.

In some embodiments, the method further includes: determining a UE and/or a UE group, associated with the data flow, according to UE identification information in the AF service request.

As illustrated in step 301, the AF service request may include the UE identification information. The UE identification information may include the GPSI or the IP address/prefix or the MAC address for identifying the UE. The UE identification information may also include an external group identifier for identifying the UE group, and the like.

The PCF may determine the UE and/or the UE group associated with the data flow according to the UE identification information. The UE and/or the UE group associated with the data flow may include, but be not limited to: the UE and/or the UE group for performing the data flow interaction.

Actions that the PCF may take for different UEs and/or UE groups may include but be not limited to: setting different predetermined transmission delays when data flows are transmitted or receiver over satellite backhaul links for different UEs and/or UE groups.

In some embodiments, receiving the AF service request includes: receiving the AF service request before a PDU session associated with the data flow is established.

The AF may transmit the AF service request carrying the transmission willing indication before the data flow is transmitted or received.

For example, the AF may receive the delay value of any satellite backhaul link. Therefore, the AF may receive any data flow passing over the satellite backhaul link. The AF may indicate to the PCF before the PDU session of the data flow passing the satellite backhaul link is established. After the PCF receives the AF service request, for subsequent data flows passing over the satellite backhaul link, the PCF adopts the 5QI policy of the non-satellite backhaul link to determine the 5QI of the data flow transmitted or received over the satellite backhaul link.

In some embodiments, the method further includes: in response to receiving first indication information transmitted by a SMF for indicating that the data flow is transmitted or received over the satellite backhaul link, transmitting second indication information for indicating that the data flow is transmitted or received over the satellite backhaul link to the AF; in which the AF service request is returned by the AF according to the second indication information.

The SMF may transmit the first indication information to the PCF for indicating that the data flow is transmitted or received over the satellite backhaul link. When the PCF receives the notification that the data flow is transmitted or received over the satellite backhaul link, the PCF may use the second indication information to notify the AF that the application data flow is transmitted or received over the satellite backhaul link. Based on existing solutions, the PCF may inform the AF that the data flow is transmitted or received over the satellite backhaul link. The data flow may include a service data flow (SDF) and the like.

The AF may update its delay requirement for the data flow, i.e. the delay value, in the AF service request. When the delay requirement for the data flow in the AF service request is less than or equal to the pre-transmission delay applicable to the satellite backhaul link (e.g.: 1100ms), the PCF adopts the 5QI policy of the non-satellite backhaul link to determine the 5QI of the data flow transmitted or received over the satellite backhaul link.

The AF may also carry the transmission willingness indication in the AF service request, indicating a willingness that the data flow is to be transmitted or received over the satellite backhaul link. The transmission willingness refers to the delay value that may receive any satellite backhaul link from the AF to the PCF surface. If the transmission willingness indication is received, the PCF determines the 5QI of the data flow transmitted or received over the satellite backhaul link by the 5QI policy applied to the non-satellite backhaul link.

As illustrated in FIG. 4, some embodiments provide a method for determining a quality of service identity. The method for transmitting or receiving information may be applicable to an AF of a core network and includes the following.

Step 401: an AF service request is transmitted, in which the AF service request is configured for a PCF to determine that a data flow can be transmitted or received over a satellite backhaul link and select, for the data flow, a quality of service identity corresponding to a same data flow service transmitted or received over a non-satellite backhaul link in response to determining that the data flow can be transmitted or received over the satellite backhaul link.

In the core network, the PCF may provide relevant policies for all responsible mobility, UE access selection, and PDU session.

Determining that the data flow can be transmitted or received over the satellite backhaul link includes: the data flow can be transmitted or received over the satellite backhaul link, a delay caused when transmitted or received over the satellite backhaul link can be accepted by the core network, and the like. The core network includes a 5GC.

The PCF may determine that the data flow can be transmitted or received over the satellite backhaul link. Or another network element of the core network, such as an AF, may indicate to the PCF that the data flow can be transmitted or received over the satellite backhaul link.

The satellite backhaul link is a link between the core network and the access network. Therefore, the delay caused when transmitted or received over the satellite backhaul link may be added to the CN PDB. The CN PDB represents a delay between any UPF terminating the N6 interface and the 5G-AN in the given PDB. In the 5G communication, the CN PDB does not affect the behavior of the base station. The base station may include gNB or the like. The gNB may not distinguish between data flows transmitted or received over satellite backhaul links and data flows transmitted or received over non-satellite backhaul links. Therefore, there is no need to inform the gNB whether the data flow is transmitted or received over the satellite backhaul link.

After it is determined that the data flow can be transmitted or received over the satellite backhaul link, the PCF may determine the service of quality identity of the data flow transmitted or received over the satellite backhaul link.

In some embodiments, for the 5G cellular mobile communication, the quality of service identity may include a 5G quality of service identity (5QI).

The PCF may determine the quality of service identity of the data flow transmitted or received over the satellite backhaul link by a manner of determining the quality of service identity of the data flow transmitted or received over the non-satellite transmission. For example, the standardized 5QI defined in 3GPP TS 23.501 may be used to determine the 5QI of the data flow transmitted or received over the satellite backhaul link. That is, the PCF may determine the quality of service identity of the data flow transmitted or received over the satellite backhaul link by the policy of determining the quality of service identity for the non-satellite transmission

For example, if the data flow service of the data flow transmitted or received over the satellite backhaul link is consistent with the data flow service of the data flow transmitted or received over the non-satellite backhaul link, the service of quality identities of the two data flows may be the same and the service of quality identity corresponding to the data flow transmitted or received over the non-satellite backhaul link may be used.

The delay caused when transmitted or receiver over the satellite backhaul link may be added to the CN PDB and may not affect the behavior of the gNB on the data flow. When the core network such as the 5GC may accept the delay caused when transmitted or receiver over the satellite backhaul link, the PCF may use the manner of determining the quality of service identity of the data flow of the non-satellite transmission link to determine the quality of service identity of the data flow transmitted or receiver over the satellite backhaul link.

In this way, when the data flow can be transmitted or received over the satellite backhaul link, the PCF uses the quality of service identity of the non-satellite backhaul link to determine the quality of service identity of the data flow. On the one hand, it is no longer necessary for the base station to distinguish whether the data flow is transmitted or received over the satellite backhaul link and/or for the base station to update the quality of service identity such as the 5QI according to whether the satellite backhaul link is used, reducing the load on the base station. On the other hand, when the base station processes the QoS data flow, it may ignore whether the data flow is transmitted or received over the satellite backhaul link, reducing the load on the base station. On still other hand, there is no need to change service of quality identity models such as 5QI, so as to improve the compatibility of the service of quality identity.

The AF is used for interworking with the core network to provide services for users. The AF indicates that the data flow can be transmitted or received over the satellite backhaul link by the AF service request.

The PCF determines that the data flow can be transmitted or received over the satellite backhaul link according to the AF service request.

The AF service request carries indication information, directly indicating that the data flow can be transmitted or received over the satellite backhaul link. The AF service request also carries a parameter when the data flow is transmitted or received over the satellite backhaul link, such as the delay value when transmitted or received over the satellite backhaul link, and the PCF determines whether the data flow can be transmitted or received over the satellite backhaul link.

After determining that the data flow can be transmitted or received over the satellite backhaul link, the PCF may determine the service of quality identity of the data flow.

For example, the PCF may adopt the policy of determining the quality of service identity of the non-satellite link to determine the quality of service identity of the data flow transmitted or received over the satellite backhaul link.

In some embodiments, transmitting the AF service request includes: transmitting the AF service request carrying a transmission willingness indication, in which the transmission willingness indication is configured to indicate that the data flow can be transmitted or received over the satellite backhaul link; or transmitting the AF service request carrying a delay value when the data flow is transmitted or received over the satellite backhaul link, in which the delay value is configured for the PCF to determine whether the data flow can be transmitted or received over the satellite backhaul link.

The transmission willingness indication may indicate that the data flow is transmitted or received over the satellite backhaul link. The AF may set the transmission willingness indication in the AF service request, to indicate to the PCF that the data flow is transmitted or received over the satellite backhaul link. In this case, the PCF no longer determines whether the data flow can be transmitted or received over the satellite backhaul link, but directly determines the service of quality identity of the data flow transmitted or received over the satellite backhaul link according to the policy of determining the service of quality identity of the data flow transmitted or received over the non-satellite link.

The AF also carries the delay value when the data flow is transmitted or received over the satellite backhaul link in the AF service request. The PCF determines whether the data flow is transmitted or received over the satellite backhaul link. The PCF may compare the delay value with the predetermined transmission delay for transmitting or receiving a data flow over the satellite backhaul link. If the delay value is less than or equal to the predetermined transmission delay for transmitting or receiving a data flow over the satellite backhaul link, it determines whether the data flow is transmitted or received over the satellite backhaul link and determines the service of quality identity of the data flow transmitted or received over the satellite backhaul link according to the policy of determining the service of quality identity of the data flow transmitted or received over the non-satellite link. The predetermined transmission delay for transmitting or receiving a data flow over the satellite backhaul link is 1100ms or the like.

In some embodiments, if the delay value when the data flow is transmitted or received over the satellite backhaul link, carried in the AF service request, is greater than the predetermined transmission delay for transmitting or receiving a data flow over the satellite backhaul link, the PCF may not determine the 5QI of the data flow.

In some embodiments, transmitting the AF service request carrying the transmission willingness indication includes: transmitting the AF service request carrying the transmission willingness indication in response to determining that a delay value when the data flow is transmitted or received over the satellite backhaul link is less than or equal to a first delay threshold.

The AF may determine whether the data flow can be transmitted or received over the satellite backhaul link. Before the AF service request is transmitted to the PCF, the AF may compare the delay value with the first delay threshold. The first delay threshold may be a delay value when transmitted or received over the satellite backhaul link that the AF can bear.

If the delay value is less than or equal to the first delay threshold, the AF may consider the delay value acceptable and may directly carry the transmission willingness indication in the PCF and indicate the PCF to determine the service of quality identity.

In some embodiments, transmitting the AF service request carrying the delay value when the data flow is transmitted or received over the satellite backhaul link includes: determining a delay value enabling the data flow to be transmitted or received over the satellite backhaul link according to service requirements of the data flow.

The AF may determine the delay value enabling the data flow to be transmitted or received over the satellite backhaul link according to service requirements of the data flow. And the delay value is transmitted to the PCF and the PCF further determines whether the data flow can be transmitted or received over the satellite backhaul link.

In some embodiments, before the AF service request is transmitted to the PCF, the AF may compare the delay value required by the service of the data flow with a second delay threshold. The second delay threshold may be a maximum delay value when transmitted or received over the satellite backhaul link that the AF can bear.

If the delay value is less than or equal to the second delay threshold, the AF may consider the delay value acceptable and may directly indicate the transmission willingness indication.

In some embodiments, the method further includes: determining that the data flow cannot be transmitted or received over the satellite backhaul link in response to service requirements of the data flow; and transmitting, indication information for indicating a removal of the data flow, to a core network.

The data flow cannot be transmitted or received over the satellite backhaul link may include: the delay value when the data flow is transmitted or received over the satellite backhaul link is greater than the maximum delay value that the AF can bear.

For example, if the delay value is greater than the second delay threshold, the AF may consider the delay value unacceptable and the AF may indicate the core network to remove the data flow from the QoS flow.

In some embodiments, transmitting the AF service request includes: storing, by a NEF, the AF service request into a UDR, in which a transmission willingness indication stored in the UDR is configured to be obtained by the PCF.

The AF transmits the AF service request to the UDR over the NEF and the specific steps for the NCF to obtain the AF service request are illustrated in FIG. 3, which includes the following steps.

Step 300: a PCF subscribes to a UDER of a service specific parameter.

Step 301: an AF generates an AF service request, including:
A. Service description
   The service description is information to identify a service the service parameter is applied to. The service description in the AF service request may be represented by a combination of a DNN, an S-NSSAI, an AF-Service-Identifier, and/or an application identifier.
B. A service parameter: the transmission willingness indication to transmit or receive the data flow over the satellite backhaul link.
C. Target UE(s) or a UE group

Target UE(s) or a group of UEs indicate UE(s) who the service parameter shall be delivered to. Individual UEs may be identified by a generic public subscription identity, or an IP address/prefix, or an MAC address. The group of UEs may be identified by an external group identity. If identifier(s) of target UE(s) or a group of UEs are not provided, the service parameter identified by the service description shall be delivered to any UE.

Step 302: the AF transmits the AF service request to a NEF.

Step 303: the NEF authorizes the service request and transmits the AF service request to a UDR. The UDR stores the service parameter, i.e., an indication of a willingness of transmitting or receiving the data flow over the satellite backhaul link of the service for the target UE(s) or the group of UEs.

Step 304: the NEF responds to the AF.

Step 305: the UDR notifies the PCF of the update of the service parameter, that is, an indication of a willingness of transmitting or receiving the data flow over the satellite backhaul link.

When the PCF is notified of the satellite backhaul link for the application data flow, and if the transmission willingness indication for transmitting or receiving the data flow over the satellite backhaul link is set, the PCF adopts the 5QI policy of the non-satellite backhaul link to determine the 5QI of the data flow transmitted or received over the satellite backhaul link.

In some embodiments, the AF service request further includes: a UE identification information, in which the UE identification information is configured to indicate a UE and/or a UE group associated with the data flow.

As illustrated in step 301, the AF service request may include the UE identification information. The UE identification information may include the GPSI or the IP address/prefix or the MAC address for identifying the UE. The UE identification information may also include an external group identifier for identifying the UE group, and the like.

The PCF may determine the UE and/or the UE group associated with the data flow according to the UE identification information. The UE and/or the UE group associated with the data flow may include, but be not limited to: the UE and/or the UE group for performing the data flow interaction.

Actions that the PCF may take for different UEs and/or UE groups may include but be not limited to: setting different predetermined transmission delays when data flows are transmitted or receiver over satellite backhaul links for different UEs and/or UE groups.

In some embodiments, transmitting the AF service request includes: determining that the data flow is to be transmitted or received over the satellite backhaul link before a PDU session associated with the data flow is established, and transmitting the AF service request; or transmitting the AF service request in response to receiving second indication information for indicating that the data flow is to be transmitted or received over the satellite backhaul link.

The AF may transmit the AF service request carrying the transmission willing indication before the data flow is transmitted or received.

For example, the AF may receive the delay value of any satellite backhaul link. Therefore, the AF may receive any data flow passing over the satellite backhaul link. The AF may indicate to the PCF before the PDU session of the data flow passing the satellite backhaul link is established. After the PCF receives the AF service request, for subsequent data flows passing over the satellite backhaul link, the PCF adopts the 5QI policy of the non-satellite backhaul link to determine the 5QI of the data flow transmitted or received over the satellite backhaul link.

The SMF may transmit the first indication information to the PCF for indicating that the data flow is transmitted or received over the satellite backhaul link. When the PCF receives the notification that the data flow is transmitted or received over the satellite backhaul link, the PCF may use the second indication information to notify the AF that the application data flow is transmitted or received over the satellite backhaul link. Based on existing solutions, the PCF may inform the AF that the data flow is transmitted or received over the satellite backhaul link. The data flow may include a SDF and the like.

The AF may update its delay requirement for the data flow, i.e. the delay value, in the AF service request. When the delay requirement for the data flow in the AF service request is less than or equal to the pre-transmission delay applicable to the satellite backhaul link (e.g.: 1100ms), the PCF adopts the 5QI policy of the non-satellite backhaul link to determine the 5QI of the data flow transmitted or received over the satellite backhaul link.

The AF may also carry the transmission willingness indication in the AF service request, indicating a willingness that the data flow is to be transmitted or received over the satellite backhaul link. The transmission willingness refers to the delay value that may receive any satellite backhaul link from the AF to the PCF surface. If the transmission willingness indication is received, the PCF determines the 5QI of the data flow transmitted or received over the satellite backhaul link by the 5QI policy applied to the non-satellite backhaul link.

An example is provided below in combination with any of the above-mentioned embodiments.

In the related art, when there is the satellite backhaul link, the AF will be notified.

When the AF receives the notification that there is the satellite backhaul link, the AF may execute the following solutions.

Solution 1: if the delay value, of the ongoing data flow, caused by the satellite backhaul link is unacceptable, the AF may request the 5G core network to cancel the ongoing data flow, and the 5G core network will remove the data flow from the QoS flow.

Solution 2: if the delay value caused by the satellite backhaul link is acceptable, the AF may update the delay value of the data flow.

Solution 3: does not affect the behavior of the 5GC.

It should be pointed out that the above three solutions are parallel and they may be implemented independently or be supported together in combination.

Option 1: before the data flow is transmitted or received, the AF indicates the transmission transmit willingness over the satellite backhaul link to the 5GC.

Option 2: the AF indicates the transmission transmit willingness over the satellite backhaul link to the 5GC in the AF service request.

Explanation for option 1:
The AF may provide the UDR with the transmission transmit willingness over the satellite backhaul link by the NEF or the transmission transmit willingness over the satellite backhaul link may be performed by an SLA. The SLA is an agreement between the operator and the service provider and the SLA may be preconfigured in the PCF.

The steps for the AF to provide the UDR with the transmission intention indication for transmitting or receiving over the satellite backhaul link by the NEF are illustrated in FIG. 3, which includes the following steps.

Step 300: a PCF subscribes to a UDER of a service specific parameter.

Step 301: an AF generates an AF service request, including:
A. Service description
   The service description is information to identify a service the service parameter is applied to. The service description in the AF service request may be represented by a combination of a data network name (DNN), a single network slice selection assistance information (S-NSSAI), an AF-Service-Identifier, and/or an application identifier.
B. A service parameter: the transmission willingness indication to transmit or receive the data flow over the satellite backhaul link.
C. Target UE(s) or a UE group

Target UE(s) or a group of UEs indicate UE(s) who the service parameter shall be delivered to. Individual UEs may be identified by a generic public subscription identity, or an IP address/prefix, or an MAC address. The group of UEs may be identified by an external group identity. If identifier(s) of target UE(s) or a group of UEs are not provided, the service parameter identified by the service description shall be delivered to any UE.

Step 302: the AF transmits the AF service request to a NEF.

Step 303: the NEF authorizes the service request and transmits the AF service request to a UDR. The UDR stores the service parameter, i.e., an indication of a willingness of transmitting or receiving the data flow over the satellite backhaul link of the service for the target UE(s) or the group of UEs.

Step 304: the NEF responds to the AF.

Step 305: the UDR notifies the PCF of the update of the service parameter, that is, an indication of a willingness of transmitting or receiving the data flow over the satellite backhaul link.

When the PCF is notified of the satellite backhaul link for the application data flow, and if the transmission willingness indication for transmitting or receiving the data flow over the satellite backhaul link is set, the PCF adopts the 5QI policy of the non-satellite backhaul link to determine the 5QI of the data flow transmitted or received over the satellite backhaul link.

Explanation for option 2:
When the PCF receives the notification that the application data flow or SDF is transmitted or receiving over the satellite backhaul link, the PCF will notify the AF based on existing solutions.

The AF may update its delay requirement for the data flow. When the delay requirement for the data flow in the AF service request is less than or equal to the pre-transmission delay applicable to the satellite backhaul link (e.g.: 1100ms), the PCF adopts the 5QI policy of the non-satellite backhaul link to determine the 5QI of the data flow transmitted or received over the satellite backhaul link.

Alternatively, the AF may indicate in the AF request its willingness to transmit or receive the data flow over the satellite backhaul link. If this indication is received, the PCF determines the 5QI of the data flow transmitted or received over the satellite backhaul link by the 5QI policy of the non-satellite backhaul link.

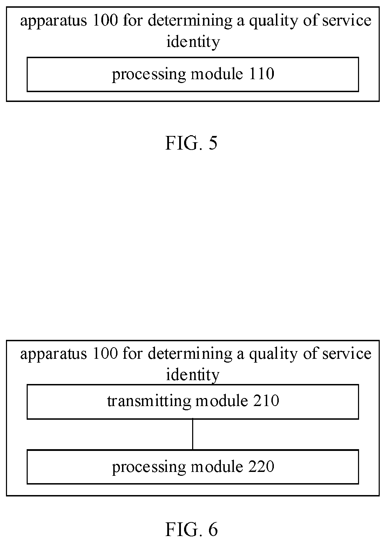

Some embodiments of the disclosure also provide an apparatus for determining a quality of service identity, which is applied to a PCF in a core network. As illustrated in FIG. 5, the apparatus 100 for determining a quality of service identity includes a processing module 110.

The processing module 110 is configured to determine that a data flow can be transmitted or received over a satellite backhaul link.

The selection module 120 is configured to select, for the data flow that can be transmitted or received over the satellite backhaul link, the quality of service identity corresponding to a same data flow service transmitted or received over a non-satellite backhaul link.

In some embodiments, the processing module 110 is configured to perform the following operation: receiving an AF service request and determining that the data flow can be transmitted or received over the satellite backhaul link according to the AF service request; or determining that the data flow can be transmitted or received over the satellite backhaul link according to a preconfigured transmission willingness indication.

In some embodiments, determining that the data flow can be transmitted or received over the satellite backhaul link according to the AF service request includes: determining that the data flow can be transmitted or received over the satellite backhaul link according to a transmission willingness indication carried in the AF service request for indicating a willingness to transmit or receive over the satellite backhaul link; or determining that the data flow can be transmitted or received over the satellite backhaul link according to a delay value carried in the AF service request being less than or equal to a predetermined transmission delay for transmitting or receiving a data flow over the satellite backhaul link.

In some embodiments, receiving the AF service request includes: receiving the AF service request before a PDU session associated with the data flow is established.

In some embodiments, the processing module 110 is configured to perform the following operation: in response to receiving first indication information transmitted by an SMF for indicating that the data flow is transmitted or received over the satellite backhaul link, transmitting second indication information for indicating that the data flow is transmitted or received over the satellite backhaul link to the AF; in which the AF service request is returned by the AF according to the second indication information.

In some embodiments, the processing module 110 is configured to perform the following operation: obtaining the AF service request from a UDR.

In some embodiments, the processing module 110 is configured to perform the following operation: determining a UE and/or a UE group, associated with the data flow, according to UE identification information in the AF service request.

Some embodiments of the disclosure also provide an apparatus for transmitting or receiving information. As illustrated in FIG. 6, the apparatus 200 for transmitting or receiving information a transmitting module 210.

The transmitting module 210 is configured to transmit an AF service request, in which the AF service request is configured for a PCF to determine that a data flow can be transmitted or received over a satellite backhaul link and select, for the data flow, a quality of service identity corresponding to a same data flow service transmitted or received over a non-satellite backhaul link in response to determining that the data flow can be transmitted or received over the satellite backhaul link.

In some embodiments, the transmitting module 210 is configured to perform the following operation: transmitting the AF service request carrying a transmission willingness indication, in which the transmission willingness indication is configured to indicate that the data flow can be transmitted or received over the satellite backhaul link; or transmitting the AF service request carrying a delay value when the data flow is transmitted or received over the satellite backhaul link, in which the delay value is configured for the PCF to determine whether the data flow can be transmitted or received over the satellite backhaul link.

In some embodiments, the transmitting module 210 is configured to perform the following operation: transmitting the AF service request carrying the transmission willingness indication in response to determining that a delay value when the data flow is transmitted or received over the satellite backhaul link is less than or equal to a first delay threshold.

In some embodiments, the apparatus 200 further includes: a processing module 220 configured to determine a delay value enabling the data flow to be transmitted or received over the satellite backhaul link according to service requirements of the data flow.

In some embodiments, the processing module 220 is configured to perform the following operation: determining that the data flow cannot be transmitted or received over the satellite backhaul link in response to service requirements of the data flow; and the transmitting module 210 is configured to transmit, indication information for indicating a removal of the data flow, to a core network.

In some embodiments, the transmitting module 210 is configured to perform the following operation: determining that the data flow can be transmitted or received over the satellite backhaul link before a PDU session associated with the data flow is established, and transmitting the AF service request in response to receiving second indication information for indicating that the data flow is to be transmitted or received over the satellite backhaul link.

In some embodiments, the transmitting module 210 is configured to perform the following operation: storing, by an NEF, the AF service request into a UDR, in which a transmission willingness indication stored in the UDR is configured to be obtained by the PCF.

In some embodiments, the AF service request further includes UE identification information, in which the UE identification information is configured to indicate a UE and/or a UE group associated with the data flow.

In some embodiments, the processing module 110, the transmitting module 210, and the processing module 220 etc. may be realized by one or more: a central processing unit (CPU), a graphics processing unit (GPU), a baseband processor (BP), an application specific integrated circuit (ASIC), a digital signal processor (DSP), a programmable logic device (PLD), a complex programmable logic device (CPLD), a field programmable gate array (FPGA), a general-purpose processor, a controller, a micro controller unit (MCU), a microprocessor, or other electronic components, to execute the aforementioned methods.

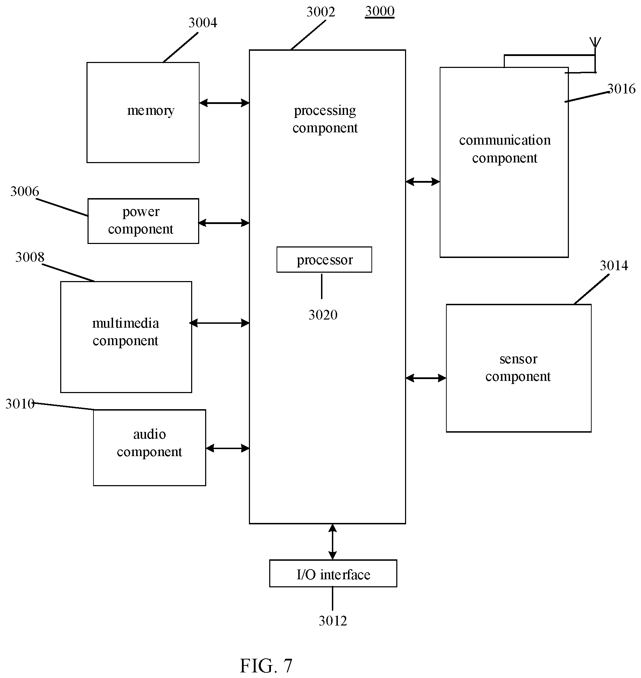

FIG. 7 is a block diagram of a device 3000 for determining a quality of service identity or transmitting or receiving information according to some embodiments. For example, the device 3000 may be a mobile phone, a computer, a digital broadcast terminal, a messaging device, a gaming console, a tablet, a medical device, exercise equipment, a personal digital assistant, and the like.

Referring to FIG. 7, the device 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the device 3000, such as the operations associated with display, telephone calls, data communications, camera operations, and recording operations. The processing component 3002 may include one or more processors 3020 to execute instructions to perform all or part of the steps in the above described methods. Moreover, the processing component 3002 may include one or more modules which facilitate the interaction between the processing component 3002 and other components. For instance, the processing component 3002 may include a multimedia module to facilitate the interaction between the multimedia component 3008 and the processing component 3002.

The memory 3004 is configured to store various types of data to support the operation of the device 3000. Examples of such data include instructions for any applications or methods operated on the device 3000, contact data, phonebook data, messages, pictures, video, etc. The memory 3004 may be implemented over any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3006 provides power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 3008 includes a front camera and/or a rear camera. The front camera and the rear camera may receive an external multimedia datum while the device 3000 is in an operation mode, such as a photographing mode or a video mode. Each of the front camera and the rear camera may be a fixed optical lens system or have focus and optical zoom capability.

The audio component 3010 is configured to output and/or input audio signals. For example, the audio component 3010 includes a microphone ("MIC") configured to receive an external audio signal when the device 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide status assessments of various aspects of the device 3000. For instance, the sensor component 3014 may detect an open/closed status of the device 3000, relative positioning of components, e.g., the display and the keypad, of the device 3000, a change in position of the device 3000 or a component of the device 3000, a presence or absence of user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may also include a light sensor, such as a CMOS or CCD image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the device 3000 and other devices. The device 3000 can access a wireless network based on a communication standard, such as WiFi, 2G, or 3G, or a combination thereof. In some embodiments, the communication component 3016 receives a broadcast signal or broadcast associated information from an external broadcast management system via a broadcast channel. In some embodiments, the communication component 3016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the device 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some possible implementation manners, technical solutions of the embodiments of the disclosure may be as follows.

Based on existing solutions, the satellite backhaul may be notified to the AF.

When the satellite backhaul notification is received, the AF may:
- Solution 1: if the delay caused by the satellite backhaul is unacceptable, request the 5GC to cancel the ongoing traffic, and the 5GC will remove the traffic from the QoS flow based on existing solutions.
- Solution 2: if the delay caused by the satellite backhaul is acceptable, update the delay requirement to the 5GC with the new value.
- Solution 3: does not affect the 5GC behavior.

It should be pointed out that the above three solutions are parallel and they may be implemented independently or supported together in combination.

In embodiments of the disclosure, solution 2 may include:
- Option 1: the AF indicates to the 5GC a willingness of transmitting or receiving over the satellite backhaul prior to service start.
- Option 2: the AF indicates to the 5GC a willingness of transmitting or receiving over the satellite backhaul in the AF service request.

It should be pointed out that the above two options are parallel and they may be implemented independently or supported together in combination.

Option 1 includes: the AF is either willing to transmit to the UDR over the satellite backhaul through NEF (details explanation below) or it is stated in the SLA between the service provider and the Public Land Mobile Network (PLMN) mobile operator, And the SLA may be pre-configured in PCF.

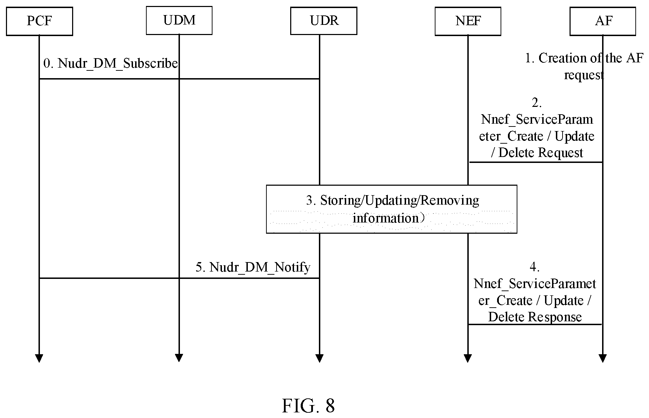

As illustrated in FIG. 8, option 1 could include:
0. a PCF subscribes to a UDR of a service specific parameter.
1. an AF creates a request, which includes:
   1) Service description: the service description is information to identify a service the service parameter is applied to. The service description in the AF service request may be represented by a combination of a DNN, an S-NSSAI, an AF-Service-Identifier, and/or an application identifier.
   2) A service parameter: the willingness indication to transmit or receive the flow over the satellite backhaul link.
   3) Target UE(s) or a UE group.
      Target UE(s) or a group of UEs indicate UE(s) who the service parameter shall be delivered to. Individual UEs may be identified by a generic public subscription identity, or an IP address/prefix, or an MAC address. The group of UEs may be identified by an external group identity. If identifier(s) of target UE(s) or a group of UEs are not provided, the service parameter identified by the service description shall be delivered to any UE.
2. The AF request is transmitted to a NEF.
3. The NEF authorizes the service request and transmits the request to a UDR. The UDR stores the service parameter, i.e., an indication of a willingness of transmitting or receiving the traffic over the satellite backhaul link of the service for the target UE(s) or the group of UEs.
4. the NEF responds to the AF.
5. The UDR notifies the PCF of the update of the service parameter, i.e. an indication of a willingness of transmitting or receiving the traffic over the satellite backhaul.

When the PCF is notified of the satellite backhaul link for the application traffic or SDF, and if the willingness for transmitting or receiving the traffic over the satellite backhaul link is set, the PCF will determine the 5QI for the non-satellite backhaul of the same service.

Option 2 could include: when the PCF receives application traffic or SDF notification for satellite backhaul, it will notify the AF based on existing solutions. The AF may update its delay requirement for service traffic in the AF Request. When the delay requirement for the service traffic in the AF request is less than the predetermined value applicable to the satellite backhaul (i.e. 1100 ms), the PCF determines the 5QI for the non-satellite backhaul of the same service. Optionally, the AF may indicate its willingness to transmit or receive services over the satellite backhaul in the AF request. If an indication is received, the PCF determines the 5QI for the non-satellite backhaul for the same service.

In some embodiments, there is also provided a non-transitory computer-readable storage medium including instructions, such as included in the memory 3004, executable by the processor 3020 in the device 3000, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for determining a quality of service identity, performed by a policy control function, PCF, comprising:
determining (201) that a data flow can be transmitted or received over a satellite backhaul link; and
selecting (202), for the data flow that can be transmitted or received over the satellite backhaul link, a quality of service identity corresponding to a same data flow service transmitted or received over a non-satellite backhaul link;
wherein determining (201) that the data flow can be transmitted or received over the satellite backhaul link comprises at least one of:
receiving an application function, AF, service request and determining that the data flow can be transmitted or received over the satellite backhaul link according to the AF service request;
determining that the data flow can be transmitted or received over the satellite backhaul link according to the AF service request comprises at least one of:
determining that the data flow can be transmitted or received over the satellite backhaul link according to a transmission willingness indication carried in the AF service request for indicating a willingness to transmit or receive over the satellite backhaul link; or
determining that the data flow can be transmitted or received over the satellite backhaul link according to a delay value carried in the AF service request being less than or equal to a predetermined transmission delay for transmitting or receiving a data flow over the satellite backhaul link.

2. The method according to claim 1, wherein receiving the AF service request comprises:
receiving the AF service request before a protocol data unit, PDU, session associated with the data flow is established.

3. The method according to claim 1 or 2, further comprising:
in response to receiving first indication information transmitted by a session management function, SMF, for indicating that the data flow is transmitted or received over the satellite backhaul link, transmitting second indication information for indicating that the data flow is transmitted or received over the satellite backhaul link to the AF; wherein the AF service request is returned by the AF according to the second indication information.

4. The method according to any one of claims 1 to 3, wherein receiving the AF service request comprises:
obtaining the AF service request from a unified data storage, UDR.

5. The method according to claim 4, further comprising:
determining a user equipment, UE, and/or a UE group, associated with the data flow, according to UE identification information in the AF service request.

6. A method for transmitting or receiving information, performed by an application function, AF, comprising:
transmitting (401) an AF service request, wherein the AF service request is configured for a policy control function, PCF, to determine that a data flow can be transmitted or received over a satellite backhaul link and select, for the data flow, a quality of service identity corresponding to a same data flow service transmitted or received over a non-satellite backhaul link in response to determining that the data flow can be transmitted or received over the satellite backhaul link; and
transmitting (401) the AF service request comprises at least one of transmitting the AF service request carrying a transmission willingness indication, wherein the transmission willingness indication is configured to indicate that the data flow can be transmitted or received over the satellite backhaul link; or
transmitting the AF service request carrying a delay value when the data flow is transmitted or received over the satellite backhaul link, wherein the delay value is configured for the PCF to determine whether the data flow can be transmitted or received over the satellite backhaul link.

7. The method according to claim 6, wherein transmitting the AF service request carrying the transmission willingness indication comprises:
transmitting the AF service request carrying the transmission willingness indication in response to determining that a delay value when the data flow is transmitted or received over the satellite backhaul link is less than or equal to a first delay threshold.

8. The method according to claim 6, wherein transmitting the AF service request carrying the delay value when the data flow is transmitted or received over the satellite backhaul link comprises:
determining a delay value enabling the data flow to be transmitted or received over the satellite backhaul link according to service requirements of the data flow.

9. The method according to any one of claims 6 to 8, further comprising:
determining that the data flow cannot be transmitted or received over the satellite backhaul link in response to service requirements of the data flow; and
transmitting, indication information for indicating a removal of the data flow, to a core network.

10. The method according to any one of claims 6 to 9, wherein transmitting (401) the AF service request comprises at least one of:
determining that the data flow is to be transmitted or received over the satellite backhaul link before a protocol data unit, PDU, session associated with the data flow is established, and transmitting the AF service request; or
transmitting the AF service request in response to receiving second indication information for indicating that the data flow is to be transmitted or received over the satellite backhaul link.

11. The method according to any one of claims 6 to 10, wherein transmitting (401) the AF service request comprises:
storing, by a network exposure function, NEF, the AF service request into a unified data storage, UDR, wherein a transmission willingness indication stored in the UDR is configured to be obtained by the PCF.

12. The method according to claim 11, wherein the AF service request further comprises user equipment, UE, identification information, wherein the UE identification information is configured to indicate a UE and/or a UE group associated with the data flow.

13. A communication device, comprising a processor (3020), a memory (3004), and an executable program stored on the memory and capable of being executed by the processor, wherein, when the processor executes the executable program, the processor performs steps of the method for determining a quality of service identity according to any one of claims 1 to 5 or the method for transmitting or receiving information according to any one of claims 6 to 12.

14. A storage medium having stored therein an executable program that, when executed by a processor (3020), steps of the method for determining a quality of service identity according to any one of claims 1 to 5 or the method for transmitting or receiving information according to any one of claims 6 to 12 are realized.

## Patentansprüche

1. Verfahren zum Bestimmen einer Dienstgüte-Kennung, das von einer Richtliniensteuerungsfunktion, PCF, durchgeführt wird, umfassend:
Bestimmen (201), dass ein Datenfluss über eine Satelliten-Backhaul-Verbindung gesendet oder empfangen werden kann; und
Auswählen (202), für den Datenfluss, der über die Satelliten-Backhaul-Verbindung gesendet oder empfangen werden kann, einer Dienstgüte-Kennung, die einem gleichen Datenflussdienst entspricht, der über eine Nicht-Satelliten-Backhaul-Verbindung gesendet oder empfangen wird;
wobei das Bestimmen (201), dass der Datenfluss über die Satelliten-Backhaul-Verbindung gesendet oder empfangen werden kann, mindestens eines der Folgenden umfasst:
Empfangen einer Anwendungsfunktions-, AF-, Dienstanfrage und Bestimmen, dass der Datenfluss über die Satelliten-Backhaul-Verbindung gesendet oder empfangen werden kann, gemäß der AF-Dienstanfrage; oder
Bestimmen, dass der Datenfluss über die Satelliten-Backhaul-Verbindung gesendet oder empfangen werden kann, gemäß einer vorkonfigurierten Übertragungsbereitschaftsanzeige; und
wobei das Bestimmen, dass der Datenfluss über die Satelliten-Backhaul-Verbindung gesendet oder empfangen werden kann, gemäß der AF-Dienstanfrage mindestens eines der Folgenden umfasst:
Bestimmen, dass der Datenfluss über die Satelliten-Backhaul-Verbindung gesendet oder empfangen werden kann, gemäß einer in der AF-Dienstanfrage enthaltenen Übertragungsbereitschaftsanzeige, die eine Bereitschaft anzeigt, über die Satelliten-Backhaul-Verbindung zu senden oder zu empfangen; oder
Bestimmen, dass der Datenfluss über die Satelliten-Backhaul-Verbindung gesendet oder empfangen werden kann, wenn ein in der AF-Dienstanfrage enthaltener Verzögerungswert kleiner oder gleich einer vorbestimmten Übertragungsverzögerung für das Senden oder Empfangen eines Datenflusses über die Satelliten-Backhaul-Verbindung ist.

2. Verfahren nach Anspruch 1, wobei das Empfangen der AF-Dienstanfrage umfasst:
Empfangen der AF-Dienstanfrage, bevor eine mit dem Datenfluss verbundene Protokolldateneinheit-, PDU-, Sitzung eingerichtet wird.

3. Verfahren nach Anspruch 1 oder 2, weiterhin umfassend:
als Reaktion auf den Empfang erster Anzeigeinformationen, die von einer Sitzungsverwaltungsfunktion, SMF, gesendet werden, um anzuzeigen, dass der Datenfluss über die Satelliten-Backhaul-Verbindung gesendet oder empfangen wird, Senden zweiter Anzeigeinformationen, um anzuzeigen, dass der Datenfluss über die Satelliten-Backhaul-Verbindung gesendet oder empfangen wird, an die AF;
wobei die AF-Dienstanfrage von der AF gemäß den zweiten Anzeigeinformationen zurückgegeben wird.

4. Verfahren nach einem der Ansprüche 1 bis 3, wobei das Empfangen der AF-Dienstanfrage umfasst:
Abrufen der AF-Dienstanfrage aus einem einheitlichen Datenspeicher, UDR.

5. Verfahren nach Anspruch 4, weiterhin umfassend:
Bestimmen eines Benutzergeräts, UE, und/oder einer UE-Gruppe, die mit dem Datenfluss verbunden ist, gemäß UE-Identifikationsinformationen in der AF-Dienstanfrage.

6. Verfahren zum Senden oder Empfangen von Informationen, das von einer Anwendungsfunktion, AF, durchgeführt wird, umfassend:
Senden (401) einer AF-Dienstanfrage, wobei die AF-Dienstanfrage für eine Richtliniensteuerungsfunktion, PCF, konfiguriert ist, um zu bestimmen, dass ein Datenfluss über eine Satelliten-Backhaul-Verbindung gesendet oder empfangen werden kann, und um für den Datenfluss eine Dienstgüte-Kennung auszuwählen, die einem gleichen Datenflussdienst entspricht, der über eine Nicht-Satelliten-Backhaul-Verbindung gesendet oder empfangen wird, als Reaktion auf das Bestimmen, dass der Datenfluss über die Satelliten-Backhaul-Verbindung gesendet oder empfangen werden kann; und
wobei das Senden (401) der AF-Dienstanfrage mindestens eines der Folgenden umfasst:
Senden der AF-Dienstanfrage enthaltend eine Übertragungsbereitschaftsanzeige, wobei die Übertragungsbereitschaftsanzeige konfiguriert ist, um anzuzeigen, dass der Datenfluss über die Satelliten-Backhaul-Verbindung gesendet oder empfangen werden kann; oder
Senden der AF-Dienstanfrage enthaltend einen Verzögerungswert, wenn der Datenfluss über die Satelliten-Backhaul-Verbindung gesendet oder empfangen wird, wobei der Verzögerungswert für die PCF konfiguriert ist, um zu bestimmen, ob der Datenfluss über die Satelliten-Backhaul-Verbindung gesendet oder empfangen werden kann.

7. Verfahren nach Anspruch 6, wobei das Senden der AF-Dienstanfrage enthaltend die Übertragungsbereitschaftsanzeige umfasst:
Senden der AF-Dienstanfrage enthaltend die Übertragungsbereitschaftsanzeige als Reaktion auf das Bestimmen, dass ein Verzögerungswert, wenn der Datenfluss über die Satelliten-Backhaul-Verbindung gesendet oder empfangen wird, kleiner oder gleich einem ersten Verzögerungsschwellenwert ist.

8. Verfahren nach Anspruch 6, wobei das Senden der AF-Dienstanfrage enthaltend den Verzögerungswert, wenn der Datenfluss über die Satelliten-Backhaul-Verbindung gesendet oder empfangen wird, umfasst:
Bestimmen eines Verzögerungswerts, der es dem Datenfluss ermöglicht, über die Satelliten-Backhaul-Verbindung gesendet oder empfangen zu werden, gemäß den Dienstanforderungen des Datenflusses.

9. Verfahren nach einem der Ansprüche 6 bis 8, weiterhin umfassend:
Bestimmen, dass der Datenfluss nicht über die Satelliten-Backhaul-Verbindung gesendet oder empfangen werden kann, als Reaktion auf Dienstanforderungen des Datenflusses; und
Senden von Anzeigeinformationen, um ein Entfernen des Datenflusses anzuzeigen, an ein Kernnetz.

10. Verfahren nach einem der Ansprüche 6 bis 9, wobei das Senden (401) der AF-Dienstanfrage mindestens eines der Folgenden umfasst:
Bestimmen, dass der Datenfluss über die Satelliten-Backhaul-Verbindung gesendet oder empfangen werden soll, bevor eine mit dem Datenfluss verbundene Protokolldateneinheit-, PDU-, Sitzung eingerichtet wird, und Senden der AF-Dienstanfrage; oder
Senden der AF-Dienstanfrage als Reaktion auf den Empfang zweiter Anzeigeinformationen, die anzeigen, dass der Datenfluss über die Satelliten-Backhaul-Verbindung gesendet oder empfangen werden soll.

11. Verfahren nach einem der Ansprüche 6 bis 10, wobei das Senden (401) der AF-Dienstanfrage umfasst:
Speichern der AF-Dienstanfrage durch eine Netzwerkbelichtungsfunktion, NEF, in einem einheitlichen Datenspeicher, UDR, wobei eine im UDR gespeicherte Übertragungsbereitschaftsanzeige konfiguriert ist, um von der PCF abgerufen zu werden.

12. Verfahren nach Anspruch 11, wobei die AF-Dienstanfrage weiterhin Benutzergerät-, UE-, Identifikationsinformationen umfasst, wobei die UE-Identifikationsinformationen konfiguriert sind, um ein UE und/oder eine UE-Gruppe anzuzeigen, die mit dem Datenfluss verbunden ist.

13. Kommunikationsvorrichtung, umfassend einen Prozessor (3020), einen Speicher (3004) und ein ausführbares Programm, das auf dem Speicher gespeichert ist und vom Prozessor ausgeführt werden kann, wobei der Prozessor, wenn er das ausführbare Programm ausführt, die Schritte des Verfahrens zum Bestimmen einer Dienstgüte-Kennung nach einem der Ansprüche 1 bis 5 oder des Verfahrens zum Senden oder Empfangen von Informationen nach einem der Ansprüche 6 bis 12 ausführt.

14. Speichermedium, auf dem ein ausführbares Programm gespeichert ist, das, wenn es von einem Prozessor (3020) ausgeführt wird, die Schritte des Verfahrens zum Bestimmen einer Dienstgüte-Kennung nach einem der Ansprüche 1 bis 5 oder des Verfahrens zum Senden oder Empfangen von Informationen nach einem der Ansprüche 6 bis 12 realisiert.

## Revendications

1. Procédé de détermination d'une identité de qualité de service, exécuté par une fonction de contrôle de politique, PCF, comprenant :
la détermination (201) qu'un flux de données peut être transmis ou reçu via une liaison de transport par satellite ; et
la sélection (202), pour le flux de données pouvant être transmis ou reçu via la liaison de transport par satellite, d'une identité de qualité de service correspondant à un même service de flux de données transmis ou reçu via une liaison de transport non satellite ;
dans lequel la détermination (201) que le flux de données peut être transmis ou reçu via la liaison de transport par satellite comprend au moins l'une des étapes suivantes :
la réception d'une demande de service de fonction d'application, AF, et la détermination que le flux de données peut être transmis ou reçu via la liaison de transport par satellite conformément à la demande de service AF ; ou
la détermination que le flux de données peut être transmis ou reçu via la liaison de transport par satellite conformément à une indication de volonté de transmission préconfigurée; et
dans lequel la détermination que le flux de données peut être transmis ou reçu via la liaison de transport par satellite conformément à la demande de service AF comprend au moins l'une des étapes suivantes :
la détermination que le flux de données peut être transmis ou reçu via la liaison de transport par satellite conformément à une indication de volonté de transmission incluse dans la demande de service AF pour indiquer une volonté de transmettre ou de recevoir via la liaison de transport par satellite ; ou
la détermination que le flux de données peut être transmis ou reçu via la liaison de transport par satellite si une valeur de retard incluse dans la demande de service AF est inférieure ou égale à un retard de transmission prédéterminé pour la transmission ou la réception d'un flux de données via la liaison de transport par satellite.

2. Procédé selon la revendication 1, dans lequel la réception de la demande de service AF comprend :
la réception de la demande de service AF avant qu'une session d'unité de données de protocole, PDU, associée au flux de données ne soit établie.

3. Procédé selon la revendication 1 ou 2, comprenant en outre :
en réponse à la réception de premières informations d'indication transmises par une fonction de gestion de session, SMF, pour indiquer que le flux de données est transmis ou reçu via la liaison de transport par satellite, la transmission de deuxièmes informations d'indication pour indiquer que le flux de données est transmis ou reçu via la liaison de transport par satellite à l'AF;
dans lequel la demande de service AF est renvoyée par l'AF conformément aux deuxièmes informations d'indication.

4. Procédé selon l'une quelconque des revendications 1 à 3, dans lequel la réception de la demande de service AF comprend:
l'obtention de la demande de service AF à partir d'un stockage de données unifié, UDR.

5. Procédé selon la revendication 4, comprenant en outre:
la détermination d'un équipement utilisateur, UE, et/ou d'un groupe d'UE, associé au flux de données, conformément à des informations d'identification d'UE dans la demande de service AF.

6. Procédé de transmission ou de réception d'informations, exécuté par une fonction d'application, AF, comprenant :
la transmission (401) d'une demande de service AF, dans lequel la demande de service AF est configurée pour qu'une fonction de contrôle de politique, PCF, détermine qu'un flux de données peut être transmis ou reçu via une liaison de transport par satellite et sélectionne, pour le flux de données, une identité de qualité de service correspondant à un même service de flux de données transmis ou reçu via une liaison de transport non satellite en réponse à la détermination que le flux de données peut être transmis ou reçu via la liaison de transport par satellite ; et
dans lequel la transmission (401) de la demande de service AF comprend au moins l'une des étapes suivantes :
la transmission de la demande de service AF portant une indication de volonté de transmission, dans lequel l'indication de volonté de transmission est configurée pour indiquer que le flux de données peut être transmis ou reçu via la liaison de transport par satellite ; ou
la transmission de la demande de service AF portant une valeur de retard lorsque le flux de données est transmis ou reçu via la liaison de transport par satellite, dans lequel la valeur de retard est configurée pour que la PCF détermine si le flux de données peut être transmis ou reçu via la liaison de transport par satellite.

7. Procédé selon la revendication 6, dans lequel la transmission de la demande de service AF portant l'indication de volonté de transmission comprend :
la transmission de la demande de service AF portant l'indication de volonté de transmission en réponse à la détermination qu'une valeur de retard lorsque le flux de données est transmis ou reçu via la liaison de transport par satellite est inférieure ou égale à un premier seuil de retard.

8. Procédé selon la revendication 6, dans lequel la transmission de la demande de service AF portant la valeur de retard lorsque le flux de données est transmis ou reçu via la liaison de transport par satellite comprend :
la détermination d'une valeur de retard permettant au flux de données d'être transmis ou reçu via la liaison de transport par satellite conformément aux exigences de service du flux de données.

9. Procédé selon l'une quelconque des revendications 6 à 8, comprenant en outre :
la détermination que le flux de données ne peut pas être transmis ou reçu via la liaison de transport par satellite en réponse aux exigences de service du flux de données ; et
la transmission d'informations d'indication pour indiquer une suppression du flux de données à un réseau central.

10. Procédé selon l'une quelconque des revendications 6 à 9, dans lequel la transmission (401) de la demande de service AF comprend au moins l'une des étapes suivantes:
la détermination que le flux de données doit être transmis ou reçu via la liaison de transport par satellite avant qu'une session d'unité de données de protocole, PDU, associée au flux de données ne soit établie, et la transmission de la demande de service AF ; ou
la transmission de la demande de service AF en réponse à la réception de deuxièmes informations d'indication indiquant que le flux de données doit être transmis ou reçu via la liaison de transport par satellite.

11. Procédé selon l'une quelconque des revendications 6 à 10, dans lequel la transmission (401) de la demande de service AF comprend :
le stockage, par une fonction d'exposition de réseau, NEF, de la demande de service AF dans un stockage de données unifié, UDR, dans lequel une indication de volonté de transmission stockée dans l'UDR est configurée pour être obtenue par la PCF.

12. Procédé selon la revendication 11, dans lequel la demande de service AF comprend en outre des informations d'identification d'équipement utilisateur, UE, dans lequel les informations d'identification d'UE sont configurées pour indiquer un UE et/ou un groupe d'UE associé au flux de données.

13. Dispositif de communication, comprenant un processeur (3020), une mémoire (3004) et un programme exécutable stocké sur la mémoire et pouvant être exécuté par le processeur, dans lequel, lorsque le processeur exécute le programme exécutable, le processeur exécute les étapes du procédé de détermination d'une identité de qualité de service selon l'une quelconque des revendications 1 à 5 ou du procédé de transmission ou de réception d'informations selon l'une quelconque des revendications 6 à 12.

14. Support de stockage sur lequel est stocké un programme exécutable qui, lorsqu'il est exécuté par un processeur (3020), réalise les étapes du procédé de détermination d'une identité de qualité de service selon l'une quelconque des revendications 1 à 5 ou du procédé de transmission ou de réception d'informations selon l'une quelconque des revendications 6 à 12.
